# EUROPEAN PATENT APPLICATION

(11) **EP 2 887 302 A1**
(43) Date of publication of application: **24.06.2015**
(21) Application number: 14197747.0
(22) Date of filing: 12.12.2014
(51) Int. Cl.: G06Q 40/00

(54) **Systems and methods for creating rules for equity corporate actions**

(30) Priority: 20.12.2013 IN CH59982013
(71) Applicant: Infosys Limited, Bangalore 560 100 (IN)
(72) Inventor: Roy, Abhra, 560 100 Bangalore (IN); Diwan, Priyanka, 560 100 Bangalore (IN); Valluri, Pavan Kumar, 560 100 Bangalore (IN)
(74) Representative: Lloyd, Patrick Alexander Desmond

(57) **Abstract**

A system and method for creating rules for equity corporate actions and their variations is disclosed. The method includes receiving the data corresponding to corporate action event from at least one agent. Thereafter, method includes generating a rule for one or more one corporate action event from the received data by using one or more common parameters, wherein the common parameters define the one or more corporate action event. Further, the method includes executing the rule generated for the one or more corporate action event, wherein the rule generated is stored in the repository. Further, the method includes delivering the entitlement based on the rule for the one or more corporate action event. Thereby, the method enables financial institutions to handle any corporate action event and their variations.

## Description

### FIELD

The field relates generally to creating rules for equity corporate actions in a capital market. In particular, the field relates to a method and a system for creating rules for equity corporate actions and their variations received from the agents.

### BACKGROUND

A Corporate Action is an event initiated when a company's financial position changes which has an impact on the securities such as stock issued by the Company. A few corporate actions could include dividend paid on a security, bonus units allotted, corporate mergers, tender offers, stock splits, redemptions, spin-offs, rights issues liquidation of the security and the like. A corporate action could have a direct or indirect impact on the securities issued by the company. Direct Impact could include dividend paid on a security, bonus units allotted etc. Indirect impact could include Name Change of a security, increased liquidity of the security due to a stock split and the like. Currently, multiple corporate action events are possible on a security. However Issuers of a security can announce a corporate action event with multiple variations to the commonly known Corporate Action Types.

The processing of various corporate action events is done by financial institutions such as investment Banks and they track, monitor and process the events related to corporate actions. Event information related to the corporate action event may include market data coming from various market agents such as financial service providers, financial news, market news and the like. Currently, financial institutions can process the commonly known Corporate action types and cannot handle any new corporate action events with variations. Currently, if any new corporate action event with variations is received from market agents or vendors, the financial institutions will not be able to process the new corporate action events, the system will have to be reconfigured to handle the variations in the corporate action events. The existing systems are effort consuming and therefore require more resources, time, and expenditure. There is a need for a common platform for handling all corporate action events and their variations without the need to reconfigure the system and thereby reduce resource consumed, effort, time and cost. There is a need for an improved method and system for handling all corporate action events and their variations received from plurality of agents such as financial service providers and the like.

### SUMMARY

The present technique overcomes the above mentioned limitation by maintenance of common parameters which are applicable to a corporate action event. Further it enables financial institutions to define any corporate action event and its variation by appropriately outlining the common parameters.

According to the present embodiment, a method for creating rules for equity corporate actions and their variations received from the agents is disclosed. The method includes receiving the data corresponding to one or more corporate action events from at least one agent. Thereafter, method includes generating a rule for the one or more corporate action events from the received data by using one or more common parameters, wherein the common parameters define the one or more corporate action events. Further, the method includes executing the rule generated for the one or more corporate action events, wherein the rule generated is stored in the repository. Further, the method includes delivering the entitlement based on the rule for the one or more corporate action events. Thereby, the method enables the banks to handle any corporate action event and their variations.

In an additional embodiment, a system for creating rules for equity corporate actions and their variations received from the agents is disclosed. The system includes a receiver component configured to receive the data corresponding to one or more corporate action events from at least one agent. Further, the system includes a rule generator component configured to generate at least one rule for the one or more corporate action events from the received data by using one or more common parameters. Further, the system includes a rule execution component configured to execute the at least one generated rule for the one or more corporate action event. Further, the system includes an entitlement delivery component configured to deliver at least one entitlement based on the at least one rule for the one or more corporate action event. Further, the rule generated is stored in the repository.

In another embodiment, a computer readable storage medium for creating rules for equity corporate actions and their variations received from the agents is disclosed. The computer readable storage medium which is not a signal stores computer executable instructions for receiving the data corresponding to one or more corporate action events from the agents, generating a rule for the one or more corporate action events from the data received by using one or more common parameters, wherein the common parameters define the one or more corporate action events. Further, executing the generated rule for the one or more corporate action event and delivering the entitlement based on the rule for the one or more corporate action events, and storing the rule generated in the repository.

### DRAWINGS:

Various embodiments of the invention will, hereinafter, be described in conjunction with the appended drawings. There is no intention to limit the scope of the invention to such blocks or objects, or to any particular technology. Instead these simplified diagrams are presented by way of illustration to aid in the understanding of the logical functionality of one or more aspects of the instant disclosure and is not presented by way of limitation.
FIG. 1 is a computer architecture diagram illustrating a computing system capable of implementing the embodiments presented herein.
FIG. 2 is a flowchart, illustrating a method for creating rules for equity corporate actions and their variations received from the agents, in accordance with an embodiment of the present invention.
FIG. 3 is a block diagram illustrating a system for creating rules for equity corporate actions and their variations received from the agents, in accordance with an embodiment of the present invention.

### DETAILED DESCRIPTION:

The foregoing has broadly outlined the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific embodiment disclosed may be readily utilized as a basis for modifying or designing other structures for carrying out the same purposes of the present disclosure. It should also be realized by those skilled in the art that such equivalent constructions do not depart from the spirit and scope of the disclosure as set forth in the appended claims. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

Exemplary embodiments of the present invention provide a system and method for creating rules for equity corporate actions and their variations received from the agents. This involves receiving the data related to a variation of one or more corporate action events, generating a rule for the one or more corporate action events from the received data using one or more common parameters, wherein the common parameters define the one or more corporate action event. Further, executing the generated rule for the one or more corporate action event and delivering the entitlement based on the rule for the one or more corporate action events, and storing the rule generated in the repository.

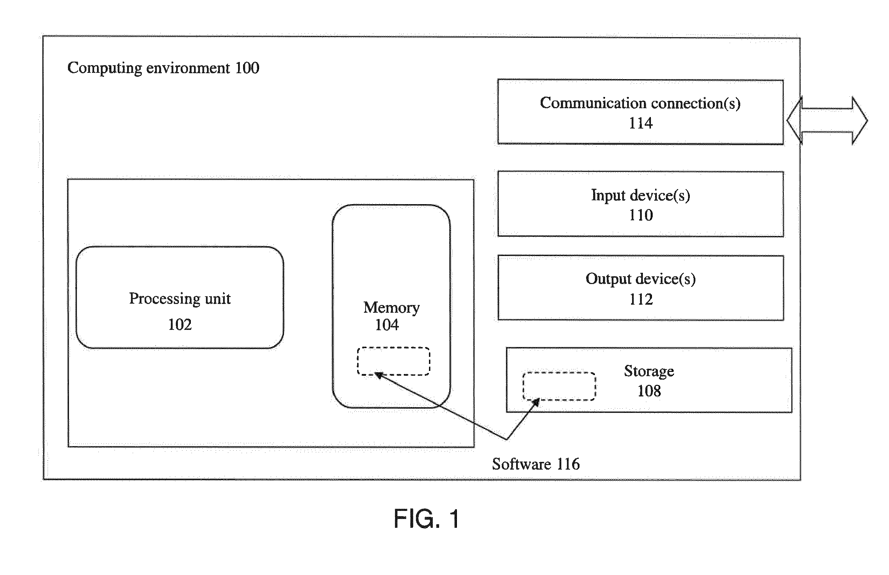

FIG.1 illustrates a generalized example of a suitable computing environment 100 in which all embodiments, techniques, and technologies of this invention may be implemented. The computing environment 100 is not intended to suggest any limitation as to scope of use or functionality of the technology, as the technology may be implemented in diverse general-purpose or special-purpose computing environments. For example, the disclosed technology may be implemented using a computing device (e.g., a server, desktop, laptop, hand-held device, mobile device, PDA, etc.) comprising a processing unit, memory, and storage storing computer-executable instructions implementing the service level management technologies described herein. The disclosed technology may also be implemented with other computer system configurations, including hand held devices, multiprocessor systems, microprocessor-based or programmable consumer electronics, network PCs, minicomputers, mainframe computers, a collection of client/server systems, and the like.

With reference to FIG. 1, the computing environment 100 includes at least one central processing unit 102 and memory 104. The central processing unit 102 executes computer-executable instructions. In a multi-processing system, multiple processing units execute computer-executable instructions to increase processing power and as such, multiple processors can be running simultaneously. The memory 104 may be volatile memory (e.g., registers, cache, RAM), non-volatile memory (e.g., ROM, EEPROM, flash memory, etc.), or some combination of the two. The memory 104 stores software 116 that can implement the technologies described herein. A computing environment may have additional features. For example, the computing environment 100 includes storage 108, one or more input devices 110, one or more output devices 112, and one or more communication connections 114. An interconnection mechanism (not shown) such as a bus, a controller, or a network, interconnects the components of the computing environment 100. Typically, operating system software (not shown) provides an operating environment for other software executing in the computing environment 100, and coordinates activities of the components of the computing environment 100.

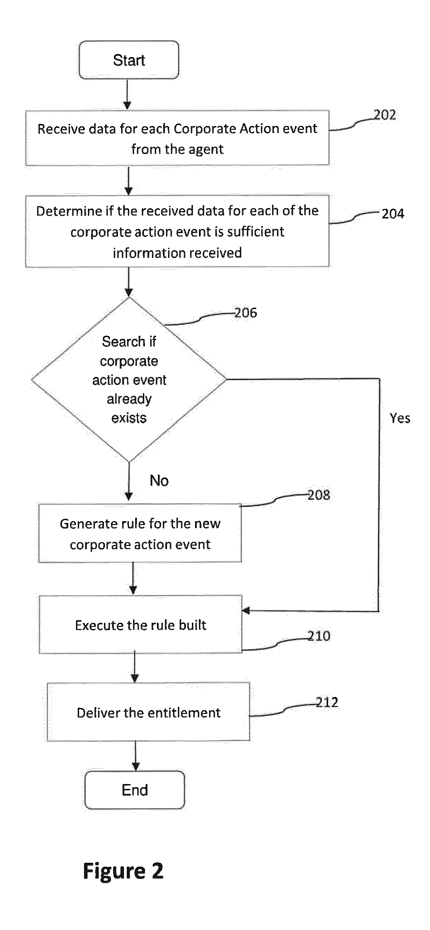

FIG. 2 is a flowchart, illustrating a method for creating rules for equity corporate actions and their variations received from the agents, in accordance with an embodiment of the present invention. This method can be used for creating rules for equity corporate actions and their variations by maintaining a set of common parameters which are applicable to a corporate action event. Further the variations to the corporate actions can be defined by appropriately outlining the common parameters. The data corresponding to one or more corporate action events is received by a processor from the agent in step 202. Then, it is determined if the received data for each of the one or more corporate action events is sufficient in step 204. The data received can be details corresponding to the common parameters and the variations of the one or more corporate action events.

The common parameters which are applicable to Equity Corporate Actions are:
a) Nature of Corporate Action:
   1.Mandatory : A mandatory corporate action is an event initiated by the corporation by the board of directors that affects all shareholders. Participation of shareholders is mandatory for these corporate actions.
   2.Mandatory with Choice : This corporate action is a mandatory corporate action where share holders are given a chance to choose among several options.
   3.Voluntary: An voluntary corporate action is an action where the shareholders elect to participate in the action. A response is required by the corporation to process the action.
b) Allocation Parameters: To define the result of the corporate Action on the security held by the owners. Possible Options are:
   1.Unit Allocation
   2.Amount Allocation
   3.Both Units and Amount
   4.Either Amount or Units
   5.None of the Above/Not Applicable
c) Holding Change in Existing Security: This parameter defines whether the Corporate action leads to a change in the existing holdings of customers in the security. Possible Values are:
   1. Increase
   2. Decrease
   3. No change in existing Security
d) Holding Increase in New Security: This parameter defines whether the Corporate Action results in the existing shareholders receiving shares of a New security.
e) Record Date Units Applicability: This parameter defines if record date units are used in Calculation of Allocation. This would be applicable if allocation as part of the Corporate Action is in terms of Units or Amount to the shareholders and the allocation is dependent on the record date holdings of the shareholder.
f) Basis of Allocation: This parameter defines the basis of allocating additional Units or Amount to the Shareholders. The basis of Allocation could be
   1. Allocation Per security
   2. Ratio of Allocation
   3. Total securities held by Shareholder
   4. User desired lot of securities
g) Change in Face Value: This parameter defines if the Corporate Action leads to a change in Face Value of the Security. Possible Options are:
   1. Increase in Face Value
   2. Decrease in Face Value
   3. No Change
h) Payment by Shareholder for Unit Allocation: If new securities are allocated to the existing shareholder, whether a payment is made to the company for the securities held by the shareholder. Few examples are provided for ease of understanding and not limited to only these.
   1. In case of Bonus Share allocation, no payment is made by the shareholder to the company.
   2. In case a shareholder exercises his Right to subscribe to new securities, a payment will be made by the shareholder to the company.
i) Distribution of Cash by Company to Shareholders: If a Corporate Actions results in reduction in the existing holdings of a shareholder, whether a payment is made to the shareholder. Few examples are provided for ease of understanding and not limited to only these.
   1. In case of Liquidation, the shareholders might be paid for the holdings which are liquidated.
   2. In case of Reverse Split, even though the outstanding shares get reduced, there is no payment made to the shareholders as the total value of shares remains the same.

These are the few common parameters applicable to equity corporate action but this list is not exhaustive. The variations could be in terms of allocation unit or any other common parameter corresponding to the corporate action event. These common parameters can be maintained and can be properly outlined when the details of the variation is received. Then, it is searched if the one or more corporate action events already exists in the repository in step 206. If the one or more corporate action events does not exist then, a rule for the new corporate action event for the data received is generated in step 208. With the details of the common parameters, the rule can be generated for the new corporate action event. The generated rule for the one or more corporate action event is executed in step 210. If the one or more corporate action event already exists in the repository then the existing corporate action event is executed in step 210. The entitlement for the one or more corporate action events is delivered in step 212.

For the purpose of describing the present method, Merger/Acquisition between two companies is taken as an example but the present example does not limit the scope of the disclosure. Merger of company X is announced with company Y effective from 1 st January 2013. This is an example of a Merger corporate action event with Cash and Stock. Terms of the merger are as follows: For each share of Company X, shareholders will receive 0.40035 of a share of Company Y and $2.69 in cash. The above notification can be received by the financial institutions from agents such as market news, financial agents and the like. Once the notification is received, the common parameters for the corporate action event can be defined as follows:
a) Nature of Corporate action: Mandatory
b) Allocation: Both Cash and Stock
c) Holding Change in existing security: Decrease in existing security
d) Holding increase in new security: Increase in new security
e) Record Date Units Applicable : Yes
f) Allocation Basis: allocation per unit
g) Cash Debit for Units: No
h) Cash Payout for Units: Not Applicable

For the Corporate Action events defined, the rule for the corporate action event can be generated with details of the common parameters such as record date, allocation per unit in terms of Cash/Stock or Cash and Stock. Here, the allocation per unit is in terms of both cash and stock. Subsequent to the rule generated for the corporate action event, the execution and entitlement delivery of the allocation for the respective corporate action event can be carried out. A variation of the above event could be in terms of allocation per unit in terms of only cash or only stock. Then, once the notification is received the rule can be generated for the new corporate action event with details of the common parameters. Subsequently, rule can be executed and entitlement can be delivered.

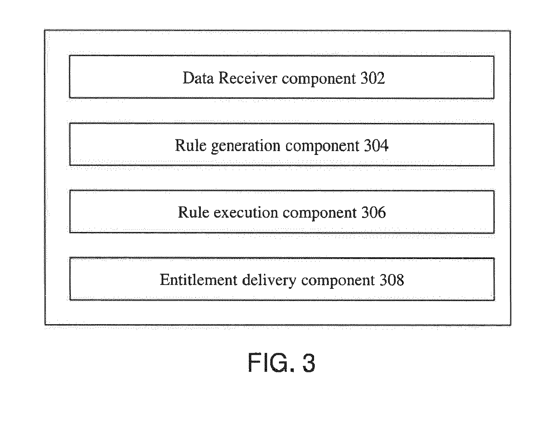

FIG. 3 is a block diagram illustrating a system for creating rules for equity corporate actions and their variations received from the agents, in accordance with an embodiment of the present invention. The system includes a data receiver component 302, a rule generation component 304, a rule execution component 306, and an entitlement delivery component 308. The data receiver component 302 is configured to receive the data corresponding to one or more corporate action event from the agent. The rule generation component 304 is configured to generate a rule for the one or more corporate action event from the received data by using one or more common parameters. The rule execution component 306 is configured to execute the generated rule for the one or more corporate action event. The entitlement delivery component 308 is configured to deliver an entitlement based on the rule for the one or more corporate action events. The details of defining the common parameters are discussed herein above with reference to FIG.2.

The above mentioned description is presented to enable a person of ordinary skill in the art to make and use the invention and is provided in the context of the requirement for obtaining a patent. Various modifications to the preferred embodiment will be readily apparent to those skilled in the art and the generic principles of the present invention may be applied to other embodiments, and some features of the present invention may be used without the corresponding use of other features. Accordingly, the present invention is not intended to be limited to the embodiment shown but is to be accorded the widest scope consistent with the principles and features described herein.

## Claims

1. A computer implemented method for creating at least one rule for one or more corporate action events, the method comprising:
receiving, by a processor, data corresponding to the one or more corporate action events from at least one agent;
generating, by the processor, at least one rule for the one or more corporate action events from the received data by using one or more common parameters;
executing, by the processor, the at least one generated rule for the one or more corporate action events; and
delivering, by the processor, at least one entitlement based on the at least one rule for the one or more corporate action events.

2. The method of claim 1, wherein the one or more corporate action events include one or more variations of the one or more corporate action events.

3. The method of claim 1 further comprises determining if the received data is sufficient to generate the at least one rule.

4. The method of claim 1 further comprises storing the at least one rule in a repository.

5. The method of claim 4 further comprises determining if the one or more corporate action events are already existing in the repository.

6. The method of claim 1, wherein the one or more common parameters define the one or more corporate action events.

7. A system for creating at least one rule for one or more corporate action events, the system comprising:
a processor in operable communication with a processor readable storage medium, the processor readable storage medium containing one or more programming instructions whereby the processor is configured to implement:
a receiving component configured to receive the data corresponding to the one or more corporate action events from at least one agent;
a rule generation component configured to generate at least one rule for the one or more corporate action events from the received data by using one or more common parameters;
a rule execution component configured to execute the at least one generated rule for the one or more corporate action events; and
an entitlement delivery component configured to deliver at least one entitlement based on the at least one rule for the one or more corporate action events.

8. The system of claim 7, wherein the one or more corporate action events includes one or more variations of the one or more corporate action events.

9. The system of claim 7 further comprises a data sufficiency determination component configured to determine if the received data is sufficient to generate the at least one rule.

10. The system of claim 7 further comprises a repository configured to store the at least one rule.

11. The system of claim 10 further comprises a determination component configured to determine if the one or more corporate action events already exist in the repository.

12. The system of claim 7, wherein the one or more common parameters define the one or more corporate action events.

13. A non-transitory computer readable medium having stored thereon instructions for creating at least one rule for one or more corporate action events, comprising machine executable code which when executed by at least one processor, causes the at least one processor to perform steps comprising:
receiving data corresponding to the one or more corporate action events from at least one agent;
generating the at least one rule for the one or more corporate action events from the received data by using one or more common parameters;
executing the at least one generated rule for the one or more corporate action events; and
delivering at least one entitlement based on the at least one rule for the one or more corporate action events.
